# EUROPÄISCHE PATENTSCHRIFT

(11) **EP 3 472 586 B1**
(45) Veröffentlichungstag und Bekanntmachung des Hinweises auf die Patenterteilung: **21.02.2024**
(21) Anmeldenummer: 17732045.4
(22) Anmeldetag: 09.06.2017
(51) Int. Cl.: G01L 5/22, G01L 5/10, B25J 13/08, B25J 19/00

(54) **VORRICHTUNG, VERSORGUNGSLEITUNG FÜR EINE SOLCHE, SENSORLEITUNG UND VERFAHREN ZUR TORSIONSMESSUNG**
DEVICE, SUPPLY LINE FOR A DEVICE OF SAID TYPE, SENSOR LINE, AND TORSION MEASUREMENT METHOD
DISPOSITIF, CONDUITE D'ALIMENTATION POUR UN TEL DISPOSITIF, CÂBLE DE DÉTECTEUR ET PROCÉDÉ DE TORSIOMÉTRIE

(30) Priorität: 15.06.2016 DE 102016210603
(43) Veröffentlichungstag der Anmeldung: 24.04.2019
(73) Patentinhaber: LEONI Kabel GmbH, 91154 Roth (DE)
(72) Erfinder: KÖPPENDÖRFER, Erwin, 91126 Schwabach (DE); NACHTRAB, Johannes, 91575 Windsbach (DE)
(74) Vertreter: FDST Patentanwälte
(86) Internationale Anmeldenummer: PCT/EP2017/064122
(87) Internationale Veröffentlichungsnummer: WO 2017/216060

(56) Entgegenhaltungen:
- DE-U1-202005 005 869
- US-A1- 2010 081 969
- US-A1- 2012 065 902

## Beschreibung

Die Erfindung betrifft eine Vorrichtung und ein Verfahren zur Messung der Torsion.

Eine Versorgungsleitung dient zur Verbindung zweier Maschinenteile und zur Übertragung von Energie, Signalen und/oder Arbeitsmedien zwischen den beiden Maschinenteilen. Die beiden Maschinenteile sind häufig relativ zueinander beweglich, sodass die Versorgungsleitung insbesondere wiederkehrenden mechanischen Belastungen ausgesetzt ist, besonders Torsionsbelastungen, aber z.B. auch Biegebelastungen. Besonders hohe Anforderungen bezüglich der Flexibilität einer solchen Versorgungsleitung ergeben sich im Bereich von Robotern, beispielsweise Roboterarmen in der Fertigung. Auch im automotiven Bereich werden Versorgungsleitungen oftmals potentiell stark beansprucht.

Kritisch ist dabei insgesamt, dass die Versorgungsleitung konstruktionsbedingt nur ein bestimmtes Maß an Verformung, insbesondere Torsion, toleriert und bei einer Überbeanspruchung die Gefahr eines Funktionsausfalls besteht. Grundsätzlich ist es möglich, die Versorgungsleitung über eine starre Führungskontur oder eine bewegungslimitierte Mechanik zwangszuführen, d.h. lediglich entlang eines vorbestimmten Pfads zu führen und die Bewegung auf bestimmte Fixpunkte, z.B. Drehpunkte zu beschränken. An diesen Fixpunkten kann dann mittels herkömmlicher Sensoren die Torsionsbelastung gemessen werden. Die mitunter regelmäßige Lageänderung und wiederholte Verformung der Versorgungsleitung ist in den eingangs genannten Einsatzbereichen jedoch besonders komplex und es wird oftmals ein hohes Maß an Variabilität verlangt. Eine Erfassung der Torsionsbelastung bei nicht-zwangsgeführten Versorgungsleitungen ist jedoch mit herkömmlichen Sensoren nicht möglich.

Vor diesem Hintergrund ist es eine Aufgabe der Erfindung, eine zuverlässige Überwachung oder Messung der Torsion bei solchen beanspruchten, insbesondere nicht zwangsgeführten Versorgungsleitungen zu ermöglichen. Hierzu soll eine Vorrichtung mit einer Versorgungsleitung angegeben werden, deren Torsion möglichst einfach und flexibel messbar ist und gemessen wird. Die Versorgungsleitung selbst soll dabei möglichst frei beweglich sein. Des Weiteren soll eine Torsionsmessung insbesondere gerade nicht lediglich punktuell erfolgen, sondern unter Berücksichtigung der gesamten Versorgungsleitung. Weiterhin soll eine entsprechende Versorgungsleitung angegeben werden sowie eine Sensorleitung und ein Verfahren zur Messung der Torsion der Versorgungsleitung.

In DE 20 2005 005 869 U1 wird eine Versorgungsleitung mit einem integrierten Überwachungssensor beschrieben, zur Überwachung der Verformung der Versorgungsleitung. Der Überwachungssensor umfasst eine Lichtleiterfaser, welche von einer Ummantelung umgeben ist, welche bei einer Krafteinwirkung gegen die Lichtleiterfaser gepresst wird.

Die US 2010/0081969 A1 beschreibt einen Dehnsensor für eine Sehne.

Die US 2012/0065902 A1 beschreibt einen Roboter, mit einem Kraftsensor, welcher ein flexibles Element aufweist, welches bei einer Kraft oder bei einem Drehmoment auf eine Hand des Roboters verformbar ist.

Die Aufgabe wird erfindungsgemäß gelöst durch eine Vorrichtung mit den Merkmalen gemäß Anspruch 1 sowie durch ein Verfahren mit den Merkmalen gemäß Anspruch 12. Vorteilhafte Ausgestaltungen, Weiterbildungen und Varianten sind Gegenstand der Unteransprüche. Dabei gelten die Ausführungen im Zusammenhang mit der Vorrichtung sinngemäß auch für das Verfahren sowie umgekehrt.

Die Vorrichtung weist generell zwei Maschinenteile auf, welche relativ zueinander beweglich sind und welche mittels einer Versorgungsleitung miteinander verbunden sind. Die Versorgungsleitung selbst weist üblicherweise eine Anzahl, also ein oder mehrere Versorgungstränge auf, über die das eine der beiden Maschinenteile versorgt wird. Neben den Versorgungssträngen weist die Versorgungsleitung zusätzlich eine Sensorleitung zur Messung der Torsion der Versorgungsleitung auf, d.h. zur Messung einer Verdrehung der Versorgungsachse um eine (Mitten-) Längsachse derselben. Dabei ist die Sensorleitung an eine Messeinheit angeschlossen, welche derart ausgebildet ist, dass ein elektrischer Parameter der Sensorleitung gemessen wird und dass mittels des Parameters auf die Torsion zumindest geschlossen wird. Aus dem Messwert des Parameters wird daher eine Kenngröße für die aktuelle Torsionsbelastung abgeleitet und damit zumindest indirekt die Torsion bestimmt. Dabei wird insbesondere die Torsion der Versorgungsleitung entlang deren insbesondere gesamter Länge zwischen den beiden Maschinenteilen bestimmt.

Der Erfindung liegt insbesondere die Beobachtung zugrunde, dass eine Torsionsmessung herkömmlicherweise lediglich punktuell durch Anbringen eines Torsionssensors möglich ist. Die Versorgungsleitung muss dann beispielsweise zwangsgeführt sein, um lediglich in bestimmter Weise belastet zu werden, sodass eine Messung der Torsion an bestimmten Fixpunkten möglich ist. Alternativ müssen entsprechend viele Sensoren entlang der Versorgungsleitung verteilt angeordnet werden, wodurch die Messung in konstruktiver Hinsicht besonders aufwendig ist. Demgegenüber wurde erkannt, dass sich die elektrischen Eigenschaften einer Leitung mit geeignetem Aufbau bei einer Bewegung und/oder Verformung in messbarer Weise verändern, sodass eine entsprechende Leitung vorteilhaft als Sensorleitung verwendbar ist. Ein wesentlicher Vorteil der Erfindung besteht somit insbesondere darin, dass auf spezielle Torsionssensoren verzichtet wird und stattdessen eine geeignete Sensorleitung als Torsionssensor verwendet wird. D.h. die Sensorleitung ist keine Zuleitung zu einem Sensor, sondern selbst ein Sensor, genauer gesagt ein Torsionssensor. Die Torsion wird daher mittels der Sensorleitung nicht punktuell, sondern über größere Längsabschnitte von typischerweise mehreren 10cm bis hin zu mehreren Metern, insbesondere über die gesamte Länge der Sensorleitung, erfasst.

Die Sensorleitung wird entlang der Versorgungsleitung angeordnet und ist mit dieser verbunden, sodass die Sensorleitung folglich den gleichen oder zumindest ähnlichen Belastungen unterliegt wie die Versorgungsleitung. Durch Messung des elektrischen Parameters, d.h. einer der elektrischen Eigenschaften der Sensorleitung wird dann auf besonders einfache Weise die Verformung der Sensorleitung selbst und mit dieser auch die Verformung der Versorgungsleitung gemessen. Dabei wird bei der Messung prinzipbedingt der Verlauf der gesamten Sensorleitung berücksichtigt und entsprechend ein langgestreckter und insbesondere durchgängiger Abschnitt der Versorgungsleitung. Vorzugsweise verläuft die Sensorleitung entlang der gesamten Versorgungsleitung, sodass die Torsion derselben insgesamt gemessen wird. Alternativ wird die Torsion jedoch lediglich abschnittsweise gemessen und hierzu die Sensorleitung lediglich abschnittsweise entlang der Versorgungsleitung angebunden.

Die Sensorleitung ist Teil der Versorgungsleitung und mit dieser mechanisch verbunden. Insbesondere bildet Sie mit den einzelnen Versorgungssträngen der Versorgungsleitungen einen Verbund, welcher bevorzugt von einem gemeinsamen Außenmantel umgeben ist.

Mittels der Sensorleitung lassen sich insbesondere Torsionen im Bereich von grö-ßer einer vollständigen Umdrehung der Versorgungsleitung um deren Längsachse pro laufendem Meter der Versorgungsleitung bis hin zu 20 Umdrehungen pro Meter messen. Grundsätzlich sind aber auch weniger oder mehr Umdrehungen mit der hier beschriebenen Sensorleitung messbar. Der Messbereich ist dabei vor Allem durch die konkrete Auslegung und Dimensionierung der Sensorleitung bestimmt. Durch entsprechende Anpassung der Sensorleitung ist es somit möglich, die Torsionsmessung optimal auf die vorliegende Anwendung anzupassen.

Vorzugsweise ist die Sensorleitung mechanisch robust ausgebildet, zur mehrfachen Messung der Torsion, insbesondere einer kritischen Torsion, welche nicht überschritten werden soll. Unter "mechanisch robust" wird insbesondere verstanden, dass die Sensorleitung bei einer Torsionsbeanspruchung nicht bricht. Die Sensorleitung ist demnach gerade nicht als Opferleitung konzipiert, sondern als mechanisch robuste Sensorleitung. Ein wesentlicher Vorteil ist insbesondere, dass die Sensorleitung nicht als schwächstes Glied der Versorgungsleitung ausgelegt werden muss, welches bei einem bestimmten Maß an Belastung zerbricht und dadurch eine bestimmte Torsionsbeanspruchung indiziert. Vielmehr ist die Sensorleitung vorteilhafterweise mehrfach verwendbar, um bestimmte kritische Torsionsbeanspruchungen mehrmals zu erkennen.

Die Versorgungsleitung dient vorrangig der Übertragung von Energie, Signalen und/oder Arbeitsmedien zwischen den beiden Maschinenteilen. Die einzelnen Versorgungsstränge der Versorgungsleitung sind daher wahlweise oder in beliebigen, anwendungsabhängigen Kombinationen ein Stromkabel zur Leistungsversorgung des Maschinenteils, ein Datenkabel, ein Schlauch, beispielsweise ein Hydraulik- oder ein Pneumatikschlauch zur Versorgung des Maschinenteils mit einer Hydraulikflüssigkeit, einem Betriebs- oder Schmiermittel, mit einem Gas oder mit Druckluft. Als Versorgungsstränge können weiterhin ein Hybridkabel, ein Kabelbaum verwendet werden. Die Versorgungstränge sind üblicherweise, insbesondere im Bereich der Robotik, von einem Schlauch umgeben und bilden ein Schlauchpaket aus. Die Maschinenteile müssen nicht zwangsweise zusätzlich miteinander gekoppelt sein, können allerdings beispielsweise über ein Gelenk miteinander verbunden sein. Die Maschinenteile sind beispielsweise zwei Teile eines Roboters, z.B. eine Basis und ein relativ hierzu beweglicher Manipulator. Die Versorgungsleitung führt hierbei dem Manipulator beispielsweise Energie und Steuersignale zu. In einer Variante sind die beiden Maschinenteile ein Fahrzeug und eine insbesondere elektrische Ladestation und die Versorgungsleitung ist ein Ladekabel, zur Übertragung elektrischer Energie zu einem Energiespeicher des Fahrzeugs.

Allgemein sind die beiden Maschinenteile derart zueinander beweglich, dass eine Torsion, d.h. Verdrehung der Versorgungsleitung erfolgt oder zumindest möglich ist. Insbesondere wird die Torsion im Rahmen einer online-Überwachung kontinuierlich oder in regelmäßigen Zeitabständen gemessen. Auf Grundlage und abhängig von der gemessenen Torsion wird dann beispielsweise ein Warnsignal ausgegeben, falls die Versorgungsleitung über ein vorgegebenes Limit hinaus verdreht wird. Alternativ oder zusätzlich wird die gemessene Torsion zur Verschleißprognose verwendet, d.h. die Torsion wird regelmäßig gemessen und insbesondere in einem Speicher der Messeinheit speichert, um den tatsächlichen Gebrauch und damit den Verschleiß der Versorgungsleitung zu überwachen.

Wesentlich für die Bestimmung der Torsion ist die Messung des elektrischen Parameters der Sensorleitung. Ein Kennzeichen dieses Parameters ist, dass sich dieser in Abhängigkeit einer Torsion der Sensorleitung verändert. Da die Sensorleitung mit der Versorgungsleitung mechanisch gekoppelt ist, ergibt sich aus einer Torsion der Versorgungsleitung auch eine vorzugsweise identische Torsion der Sensorleitung. Diese weist wiederum bestimmte Übertragungseigenschaften auf, welche durch den Parameter charakterisiert sind. Die Änderung des Parameters entspricht somit insbesondere einer Änderung der Übertragungseigenschaften der Sensorleitung, d.h. durch Messung des Parameters erfolgt eine Messung der Übertragungseigenschaften. Zweckmäßigerweise wird daher zur Messung des Parameters ein elektrisches Testsignal an die Sensorleitung angelegt oder in diese eingespeist und die Übertragungseigenschaften anhand der Änderung des Testsignals bestimmt. Dazu ist die Sensorleitung an die Messeinheit angeschlossen, welche ein geeignetes Testsignal bereitstellt und insbesondere dessen Änderung misst. Die Messeinheit misst den Parameter und wertet die Messung vorzugsweise auch aus, z.B. durch Vergleichen mit zuvor gemessenen Werten des Parameters. Mit der Messung des Parameters bestimmt die Messeinheit dann letztendlich die Torsion der Sensorleitung und damit auch die Torsion der Versorgungsleitung.

Das Prinzip der Messung der Torsionsbelastung der Versorgungsleitung beruht daher allgemein darauf, dass durch die Integration der Sensorleitung in die Versorgungsleitung auch die Sensorleitung einer Torsionsbeanspruchung unterliegt, welche zu einer mechanischen Änderung des Aufbaus der Sensorleitung führt, wodurch sich die Übertragungseigenschaften für ein über die Sensorleitung übermitteltes (Sensor-) Signal ändern und dadurch zu einer charakteristischen Änderung des Signals führen. Anhand dieser charakteristischen Änderung des Signals werden dann mittels der Messeinheit Rückschlüsse auf die Torsionsbelastung geschlossen.

Zur Torsionsmessung weist die Sensorleitung zwei Leiter auf, welche jeweils als Litzenleiter ausgebildet sind und mit zueinander gegensinniger Schlagrichtung verlitzt sind. Dabei ist die Messeinheit derart ausgebildet, dass als Parameter eine Signaldämpfung eines jeweiligen der Leiter gemessen wird. Dieser Ausgestaltung liegt insbesondere die Erkenntnis zugrunde, dass bei einem Litzenleiter eine Änderung der Signaldämpfung bei einer Torsion von der Schlaglänge des Litzenleiters abhängig ist, welche bei der Verlitzung gewählt wurde. Allgemein nimmt die Signaldämpfung eines Leiters besonders zu hohen Frequenzen hin zu, da aufgrund des Skineffekts der Strom nach außen gedrängt wird und dadurch der effektive Leitungsquerschnitt des Leiters verringert wird. Dadurch erhöht sich der elektrische Widerstand und es ergibt sich ein entsprechender Verlust. Bei einem Litzenleiter, welcher aus mehreren miteinander verlitzten Einzeldrähten besteht, kommt hinzu, dass der Strom zusätzlich eine Vielzahl an Übergangswiderständen zwischen den Einzeldrähten überwunden muss. Die Dämpfung ist somit abhängig von der Schlaglänge und insbesondere auch von der Drahtanzahl. Ein Leiter mit geringerer Schlaglänge und ansonsten gleichbleibender Auslegung weist dann eine erhöhte Signaldämpfung auf.

Hinzu kommt, dass die Signaldämpfung auch vom Abstand der Einzeldrähte untereinander abhängig ist. Bei einer lockereren oder loseren Verlitzung ist die Signaldämpfung größer. Dieser Effekt wird vorliegend vorteilhaft zur Messung der Torsion genutzt. Bei einer Torsion der Sensorleitung werden je nach Drehrichtung der Torsion die Einzeldrähte des Leiters aufgedreht oder enger zusammengedreht, wodurch sich die Signaldämpfung verändert und ein Testsignal, welches durch den Leiter propagiert, entsprechend beeinflusst wird. Insbesondere verringert sich hierbei die Amplitude des Testsignals, wobei die Stärke der Amplitudenänderung von der Torsion abhängig ist.

Besonders vorteilhaft ist die Verwendung von zwei gegensinnig verlitzten Litzenleitern, d.h. bei einem der Leiter sind die Einzeldrähte in S-Richtung verlitzt und bei dem anderen Leiter in Z-Richtung. Dadurch ist ein Leiterpaar ausgebildet, bei welchem die beiden Leiter bei einer Torsion in einer bestimmten Richtung unterschiedlich beeinflusst werden. Der eine Leiter wird nämlich aufgedreht, d.h. dessen Schlaglänge vergrößert, der andere Leiter wird zugedreht, d.h. dessen Schlaglänge verringert; bei einer Torsion in umgekehrter Richtung entsprechend andersherum. Dadurch lässt sich eine Torsion in beiden Richtungen gleicherma-ßen gut bestimmen.

Ein weiterer Vorteil der Verwendung eines Leiterpaars gegenüber einem einzelnen Leiter besteht insbesondere darin, dass ein Referenzpunkt definiert ist, insbesondere diejenige Lage, in welcher beide Leiter die gleiche Signaldämpfung aufweisen und in welcher die Versorgungsleitung torsionsfrei ist. Grundsätzlich ist jedoch auch hier in einer Variante möglich, eine bestimmte Stellung mit einer Vor-Torsion als Referenzpunkt zu verwenden.

Bevorzugterweise unterscheiden sich die beiden Leiter lediglich in der Schlagrichtung und sind ansonsten gleichartig ausgebildet, d.h. weisen insbesondere gleiche Durchmesser, gleiche Einzeldrahtanzahl sowie gleiche Schlaglänge auf und sind aus dem gleichen Material hergestellt.

Die Messeinheit ist derart ausgebildet, dass die beiden Signaldämpfungen miteinander verglichen werden und die Torsion in Abhängigkeit eines Unterschieds zwischen den beiden Signaldämpfungen bestimmt wird. Dazu wird jeweils die Signaldämpfung der Leiter gemessen und dann insbesondere deren Differenz gebildet, d.h. eine Signaldämpfungsdifferenz bestimmt. Anhand dieser lassen sich dann vorteilhaft die Stärke und die Richtung der Torsion bestimmen, wobei die Richtung insbesondere durch das Vorzeichen der Differenz bestimmt ist.

Die Messeinheit ist in einer bevorzugten Ausgestaltung derart ausgebildet, dass der Parameter gemessen wird, indem ein Testsignal in jeden der Leiter insbesondere an einem Ende einspeist wird und nach Propagation durch den Leiter gemessen wird. Das Testsignal ist dabei ein Hochfrequenzsignal und weist eine Frequenz im Bereich von 10 bis 100 MHz auf, vorzugsweise von 50 bis 100 MHz. Da die Signaldämpfung für höhere Frequenzen stärker ist und somit einfacher zu messen ist, ist die Verwendung eines Signals mit möglichst hoher Frequenz entsprechend vorteilhaft. Das Testsignal ist beispielsweise ein Sinussignal mit einer entsprechenden Frequenz oder alternativ ein anders geformtes Signal, mit einem Frequenzspektrum, welches zumindest eine entsprechend hohe Frequenz enthält.

Wesentlich bei der Einspeisung des Testsignals ist insbesondere, dass dieses vor dem Messen zumindest einmal den zu untersuchenden Abschnitt der Sensorleitung passiert hat. Mit anderen Worten: das Testsignal kann grundsätzlich an jeder beliebigen Stelle in den Leiter eingespeist werden, solange eine Propagation durch denjenigen Abschnitt erfolgt, dessen Torsion bestimmt werden soll. Zweckmäßigerweise wird das Signal jedoch endseitig in den Leiter eingespeist, um möglichst die gesamte Länge der Sensorleitung zu nutzen.

Bevorzugt erfolgt allgemeineine Transmissionsmessung, d.h. das Testsignal wird an einem Ende der Sensorleitung eingespeist und eine Messung des Testsignals erfolgt am anderen Ende der Sensorleitung. Alternativ besteht auch die Möglichkeit einer Reflektionsmessung, dann insbesondere am Ort der Einspeisung. Denkbar ist grundsätzlich auch die Messung mittels eines Netzwerkanalysators, kurz VNA, oder mittels einer Zeitbereichsreflektometrie, kurz TDR (time domain reflectometry). Diese beiden Lösungen sind jedoch aufwendig und kostenintensiv.

In einer vorteilhaften Ausgestaltung ist das Testsignal ein Impuls, insbesondere ein Rechtecksignal. Ein solches zeichnet sich durch eine besonders große Flankensteilheit aus und weist daher ein Frequenzspektrum mit besonders hochfrequenten Anteilen auf, nämlich insbesondere Vielfachen der Wiederholrate des Impulses. Vorteilhafterweise wird ein digitales Testsignal mit einer Datenrate im Bereich von 1 bis 20 GBit verwendet. Ein solches digitales Testsignal weist zwar eine Wiederholrate von entsprechend lediglich 1 bis 20 GHz auf, aufgrund der Rechteckform jedoch entsprechende Oberwellen, bei Vielfachen der Wiederholrate.

Die Messeinheit weist eine geeignete Auswerteschaltung auf, um ausgehend von den gemessenen Signaldämpfungen die Torsion zu ermitteln. Sowohl analoge als auch digitale Ansätze sind hierfür geeignet. In einer besonders einfachen Ausgestaltung werden die beiden gemessenen Signaldämpfungen mittels eines Operationsverstärkers verglichen, welcher dann die Differenz als Spannungswert ausgibt. Dieser wird über eine Tabelle in eine Torsion der Versorgungsleitung umgerechnet, beispielsweise in Grad oder Umdrehungen pro Meter, oder direkt als Wert für die Torsion verwendet.

Die Messung der Signaldämpfung muss auch nicht zwingend bei einer einzelnen Frequenz erfolgen. In einer geeigneten Variante wird die Signaldämpfung beispielsweise durch Integration über einen vorgegebenen Frequenzbereich bestimmt. Hierzu wird beispielsweise dem oben genannten Operationsverstärker ein geeigneter Kondensator nachgeschaltet, sodass die vom Operationsverstärker ausgegebene Differenz entsprechend über einen geeigneten Frequenzbereich integriert wird.

Die beiden Leiter bilden allgemein ein Übertragungspaar für das Sensorsignal. Allgemein sind die Leiter jeweils von einem Isolationsmantel umgeben und bilden jeweils insbesondere eine Ader aus. Im Hinblick auf eine möglichst ungestörte Übertragung der Sensorsignale ist das Übertragungspaar geeignet zueinander angeordnet. Das Übertragungspaar kann allgemein als verdrilltes oder unverdrilltes Paar ausgebildet sein sowie mit oder ohne Paarschirmung.

Gemäß einer ersten Variante erstrecken sich die beiden Adern parallel zueinander. Alternativ sind in bevorzugter Ausgestaltung die beiden Adern miteinander verseilt, d.h. das Leiterpaar selbst weist eine Schlaglänge auf. Durch diese Maßnahme sind die beiden Leiter definiert zueinander gehalten. Bei einer Verseilung ohne sogenannte Rückdrehung wird hierdurch eine jeweilige Ader und damit ein jeweiliger Leiter zusätzlich verdreht. Entsprechend wird abhängig von der Schlagrichtung bei der Verseilung des Adernpaars die Schlaglänge des einzelnen Leiters verringert oder vergrößert. Auch hierbei wird die Signaldämpfung entsprechend beeinflusst. Bei entgegengesetzter Schlagrichtung des Litzenleiters im Vergleich zur Schlagrichtung des verseilten Paares wird die Schlaglänge des Leiters zwar vergrößert, jedoch werden die Einzeldrähte auch weniger stark zusammengepresst, sodass der Verlust im Leiter, d.h. sie Signaldämpfung in diesem Fall insgesamt vergrößert ist und größer als im Vergleich zu einer Ausgestaltung mit gleichen Schlagrichtungen. Vor diesem Hintergrund ist es insbesondere bei der Integration der Sensorleitung in die Versorgungsleitung besonders vorteilhaft, die Sensorleitung mit Rückdrehung zu verseilen, um eine Vor-Torsion zu vermeiden. Bevorzugt ist durch die Rückdrehung die durch die zusätzliche Verseilung des Paares aufgebrachte Torsion vollständig kompensiert. Grundsätzlich kann eine solche Vor-Torsion jedoch auch insbesondere im Rahmen der Auswertung des gemessenen Parameters mit berücksichtigt werden.

Die Übertragungseigenschaften des Leiterpaares werden insbesondere nicht lediglich durch die Torsion beeinflusst, sondern üblicherweise auch durch den Abstand der Leiter voneinander. Um eine möglichst genaue Messung der Torsion zu ermöglichen wird daher in einer vorteilhaften Weiterbildung der Abstand zwischen den beiden Leitern fixiert. Hierzu eignet sich beispielsweise die zuvor erwähnte Paarverseilung und / oder eine Paarschirmung, über die das Adernpaar definiert gehalten ist.

In bevorzugter Alternative hierzu sind die beiden Leiter zweckmäßigerweise gemeinsam in ein Profil aus einem isolierenden Material eingebettet und in einem festen Abstand zueinander beabstandet. Das isolierende Material bildet insbesondere zugleich eine gemeinsame Ummantelung oder einen Leitungsmantel der beiden Leiter. Als Material eignen sich vor allem Kunststoffe, beispielsweise PE, PP, PVC oder PA. Vorzugsweise ist das Material möglichst wenig elastisch, zumindest im Bereich zwischen den beiden Leitern, sodass der Abstand bei einer mechanischen Belastung des Leiterpaares möglichst unverändert bleibt. Beispielsweise weist das Profil einen Steg auf, welcher zwischen den beiden Leitern angeordnet ist. Der Steg ist vorzugsweise aus einem harten Material.

In einer vorteilhaften Ausgestaltung sind die beiden Leiter jeweils als Koaxialleiter ausgebildet, d.h. individuell mit einer Schirmung versehen. Dadurch sind die Übertragungseigenschaften definierter und Störeinflüsse aus der Umgebung werden wirkungsvoll abgeschirmt.

Um insbesondere die Leiter insgesamt vor Umwelteinflüssen, vor allem elektrischen Störungen zu schützen, sind in einer geeigneten Ausgestaltung beide Leiter von einer gemeinsamen Schirmung umgeben. Dadurch sind die Leiter der Sensorleitung vorteilhaft auch in einem Gesamtverbund mit der Versorgungsleitung gegenüber anderen Leitern der Versorgungsleitung abgeschirmt.

Für die Ausgestaltung der Sensorleitung kann allgemein - unter Berücksichtigung der vorhergehenden Anforderungen für die gewünschte Auswertung der Torsionsbelastung - auf übliche Ausgestaltungen bei Datenleitungen zurückgegriffen werden. Auch kann die Sensorleitung in einen (Daten-)Leitungsverbund, beispielsweise einen (Vierer-) Verseilverbund integriert sein. Darüber hinaus besteht auch die Möglichkeit, die Sensorleitung auch für eine zusätzliche Datenübertragung und / oder Übertragung einer Versorgungsspannung bzw. einer elektrischen Leistung heranzuziehen. Im letztgenannten Fall wird das Sensorsignal beispielsweise aufmoduliert.

Nachfolgend werden Ausführungsbeispiele der Erfindung anhand einer Zeichnung näher erläutert. Darin zeigen jeweils schematisch:
- Fig. 1: eine Vorrichtung, mit einer Versorgungsleitung und einer Sensorleitung,
- Fig. 2: eine Sensorleitung, und
- Fig. 3: eine Messeinheit.

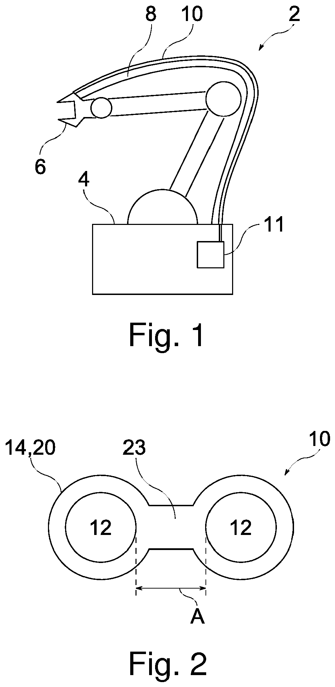

In Fig. 1 ist eine Vorrichtung 2 gezeigt, die hier ein Roboter ist. Die Vorrichtung 2 weist zwei Maschinenteile 4, 6 auf, hier eine Basis 4 und einen Manipulator 6. Die Maschinenteile 4, 6 sind mittels einer Versorgungsleitung 8 miteinander verbunden. Diese weist zur Übertragung von Energie, Daten, Signalen und/oder Arbeitsmedien üblicherweise mehrere, insbesondere unterschiedliche Arten von hier nicht näher dargestellten Versorgungssträngen in Form von elektrischen, hydraulischen oder pneumatischen Leitungen etc. auf. In Fig. 1 werden mittels der Versorgungsleitung 8 beispielsweise Steuersignale von der Basis 4 zum Manipulator 6 übertragen. In einer nicht gezeigten Variante sind die beiden Maschinenteile 4, 6 beispielsweise ein Fahrzeug und eine elektrische Ladestation und die Versorgungsleitung 8 ist ein Ladekabel, zum Laden eines Energiespeichers des Fahrzeugs.

Die Maschinenteile 4, 6 sind zueinander beweglich und entsprechend soll auch die Versorgungsleitung 8 möglichst flexibel beweglich sein. Dadurch ergeben sich unter Umständen komplexe mechanische Belastungen der Versorgungsleitung 8, besonders auch eine Torsion, d.h. Verdrehung. Die Torsion der Versorgungsleitung 8 wird mittels einer Sensorleitung 10 bestimmt, welche Teil der Versorgungsleitung 8 ist und dadurch mit den Versorgungssträngen mechanisch gekoppelt ist. Die Sensorleitung 10 wird im Falle einer Torsion der Versorgungsleitung 8 entsprechend ebenfalls verdreht. Die Sensorleitung 10 ist vorzugsweise zusammen mit den weiteren Versorgungssträngen von einem gemeinsamen Außenmantel der Versorgungsleitung 8 umgeben oder alternativ auch außen an einem solchen Außenmantel oder auch an einem Versorgungsstrang angebracht.

Die Sensorleitung 10 dient selbst als Sensor, nämlich als Torsionssensor, sodass sich zwischen den beiden Maschinenteilen 4, 6 eine Torsion nicht lediglich punktuell, sondern entlang der gesamten Versorgungsleitung 8 bestimmen lässt. Die Sensorleitung 10 weist Übertragungseigenschaften auf, welche von einer Torsion der Sensorleitung 10 abhängig sind. Diese Übertragungseigenschaften sind durch zumindest einen elektrischen Parameter P charakterisiert, welcher mittels einer Messeinheit 11 gemessen wird. Hierzu wird mittels der Messeinheit 11 ein Testsignal T in die Sensorleitung 10 eingespeist und insbesondere die Änderung des Testsignals T aufgrund veränderter Übertragungseigenschaften untersucht.

Ein Ausführungsbeispiel der Sensorleitung 10 ist in Fig. 2 im Querschnitt senkrecht zur Längsrichtung der Sensorleitung 10 dargestellt. Diese weist zwei Leiter 12 auf, mittels welcher die Messung der Torsion erfolgt.

Im Ausführungsbeispiel der Fig. 2 sind die Leiter 12 gemeinsam in ein Profil 14 eingebettet, welches hier zugleich als ein Isolationsmantel 22 dient. Die beiden Leiter 12 sind in einem Abstand A voneinander beabstandet, wobei der Abstand A durch das Profil 14 vorzugsweise auch bei einer Torsion möglichst konstant gehalten, sodass eine Beeinflussung der Übertragungseigenschaften durch eine Abstandsänderung verhindert wird. Dazu weist das Profil 14 einen Steg 23 auf, welcher zwischen den Leitern 12 angeordnet ist und vorzugsweise aus einem harten Material gefertigt ist.

Das in Fig. 2 zugrunde liegende Messprinzip nutzt die jeweilige Signaldämpfung der beiden Leiter 12 als elektrischen Parameter P. Die Leiter 12 sind hierzu jeweils als Litzenleiter ausgebildet, d.h. aus mehreren miteinander verlitzten Einzeldrähten gefertigt. Dabei sind die beiden Leiter 12 vorliegend mit gegensinniger Schlagrichtung verlitzt, d.h. der eine Leiter 12 ist in S-Richtung verlitzt, der andere in Z-Richtung. Bei einer Torsion wird dann der eine Leiter 12 aufgedreht und der andere zugedreht, wobei sich entsprechend die Signaldämpfungen in den beiden Leitern 12 dann gegensinnig ändern. Die beiden Signaldämpfungen werden mittels der Messeinheit 11 gemessen und miteinander verglichen. Anschließend werden daraus die Stärke und die Richtung der Torsion bestimmt.

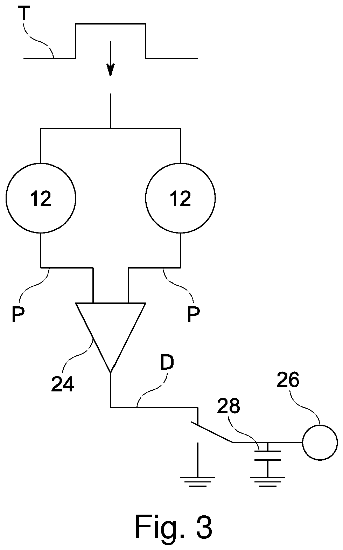

Eine Messeinheit 11 zur Messung und zum Vergleichen der Signaldämpfungen, d.h. der Parameter P der Leiter 12, ist ausschnittsweise in Fig. 3 gezeigt. In den beiden Leiter 12 wird jeweils ein Testsignal T eingespeist, welches entlang der Leiter 12 propagiert und dessen Signaldämpfung bei Propagation im jeweiligen Leiter 12 als elektrischer Parameter P gemessen wird. Die beiden gemessenen Signaldämpfungen werden hier mittels eines Operationsverstärkers 24 verglichen. Die Differenz D wird mittels eines Spannungsmessgeräts 26 gemessen und als Wert für die Torsion ausgegeben. Alternativ wird die Torsion mittels einer Tabelle anhand der Differenz D bestimmt. Bei Verwendung eines Operationsverstärkers 24 kann aufgrund von Phasenverschiebungen unter Umständen zu Problemen bei der Messung kommen. Daher werden zweckmäßigerweise bei der Messung Phasen ignoriert und lediglich Amplituden miteinander verglichen.

Das Testsignal T ist in Fig. 3 ein digitales Rechtecksignal, welches sich durch ein Frequenzspektrum mit besonders hochfrequenten Anteilen auszeichnet. Ein solches Testsignal T ist besonders zur Messung der Signaldämpfung geeignet, da diese hin zu hohen Frequenzen zunimmt. Aufgrund der Rechteckform finden sich im Frequenzspektrum des Testsignals T dann entsprechend hochfrequente Oberwellen, welche besonders stark gedämpft werden und eine einfache Messung ermöglichen. Zur Integration über einen bestimmten Frequenzbereich weist die Messeinheit 11 hier zusätzlich einen Kondensator 28 auf. Alternativ wird auf den Kondensator verzichtet.

## Patentansprüche

1. Vorrichtung mit einer Versorgungsleitung, einer Messeinheit und mit zwei Maschinenteilen, welche relativ zueinander beweglich sind und welche mittels der Versorgungsleitung miteinander verbunden sind,
wobei die Versorgungsleitung eine Sensorleitung aufweist, welche an die Messeinheit angeschlossen ist,
**dadurch gekennzeichnet,**
**dass** die Sensorleitung zur Messung der Torsion der Versorgungsleitung mit der Messeinheit ausgebildet ist,
**dass** die Messeinheit derart ausgebildet ist, dass ein elektrischer Parameter der Sensorleitung gemessen wird und dass mittels des Parameters auf die Torsion geschlossen wird,
**dass** die Sensorleitung zwei Leiter aufweist, welche jeweils als Litzenleiter ausgebildet sind und mit zueinander gegensinniger Schlagrichtung verlitzt sind,
**dass** die Messeinheit derart ausgebildet ist, dass als Parameter eine Signaldämpfung eines jeweiligen der Leiter gemessen wird,
**dass** die Messeinheit derart ausgebildet ist, dass die beiden Signaldämpfungen mittels eines Operationsverstärkers miteinander verglichen werden, welcher eine Differenz als Spannungswert ausgibt, und die Torsion in Abhängigkeit eines Unterschieds zwischen den beiden Signaldämpfungen mittels einer Tabelle anhand der Differenz bestimmt wird.

2. Vorrichtung nach Anspruch 1,
**dadurch gekennzeichnet,**
**dass** die Messeinheit derart ausgebildet ist, dass der Parameter gemessen wird, indem ein Testsignal in jeden der Leiter einspeist wird und nach Propagation durch den Leiter gemessen wird.

3. Vorrichtung nach Anspruch 2,
wobei das Testsignal ein Hochfrequenzsignal ist und eine Frequenz im Bereich von 10 bis 100 MHz aufweist.

4. Vorrichtung nach einem der Ansprüche 2 oder 3,
**dadurch gekennzeichnet,**
**dass** das Testsignal ein Impuls ist.

5. Vorrichtung nach einem der Ansprüche 1 bis 4,
**dadurch gekennzeichnet,**
**dass** die beiden Leiter von einem Isoliermantel umgeben und miteinander verseilt sind.

6. Vorrichtung nach Anspruch 5,
wobei eine durch die zusätzliche Verseilung eingebrachte Torsion durch eine Rückdrehung kompensiert ist.

7. Vorrichtung nach einem der Ansprüche 1 bis 6,
**dadurch gekennzeichnet,**
**dass** die beiden Leiter gemeinsam in ein Profil aus einem isolierenden Material eingebettet sind und in einem festen Abstand zueinander beabstandet sind.

8. Vorrichtung nach einem der Ansprüche 1 bis 7,
**dadurch gekennzeichnet,**
**dass** die beiden Leiter jeweils als Koaxialleiter ausgebildet sind.

9. Vorrichtung nach einem der Ansprüche 1 bis 8,
**dadurch gekennzeichnet,**
**dass** die beiden Leiter von einer gemeinsamen Schirmung umgeben sind.

10. Vorrichtung nach einem der Ansprüche 1 bis 9,
wobei die Versorgungsleitung eine Anzahl von Versorgungssträngen aufweist.

11. Vorrichtung nach Anspruch 10, wobei die Versorgungsleitung als ein Kabel ausgebildet ist.

12. Verfahren zur Messung der Torsion einer Sensorleitung mit einer Vorrichtung mit einer Versorgungsleitung, einer Messeinheit und mit zwei Maschinenteilen nach Anspruch 1,
wobei die Versorgungsleitung eine Sensorleitung aufweist, welche an die Messeinheit angeschlossen ist,
**dadurch gekennzeichnet,**
**dass** die Messeinheit ausgebildet ist, die nachfolgenden Verfahrensschritte auszuführen:
- Messen eines elektrischen Parameters der Sensorleitung und mittels des Parameters Schließen auf die Torsion,
- Messen einer Signaldämpfung als Parameter eines jeweiligen der Leiter,
- Vergleichen der beiden Signaldämpfungen miteinander mittels eines Operationsverstärkers, welcher eine Differenz als Spannungswert ausgibt,
- Bestimmen der Torsion in Abhängigkeit eines Unterschieds zwischen den beiden Signaldämpfungen mittels einer Tabelle anhand der Differenz.

## Claims

1. Device comprising a supply line, a measurement unit, and comprising two machine parts that are able to be moved relative to one another and that are connected to one another by means of the supply line,
wherein the supply line has a sensor line that is connected to the measurement unit,
**characterized**
**in that** the sensor line is designed to measure the torsion of the supply line using the measurement unit,
**in that** the measurement unit is designed in such a way that an electrical parameter of the sensor line is measured and that the parameter is used to infer the torsion,
**in that** the sensor line has two conductors that are each in the form of a braided conductor and are braided in mutually opposing lay directions,
**in that** the measurement unit is designed in such a way that a signal attenuation of a respective one of the conductors is measured as a parameter,
**in that** the measurement unit is designed in such a way that the two signal attenuations are compared with one another by means of an operational amplifier that outputs a difference as a voltage value, and the torsion is determined depending on a difference between the two signal attenuations by means of a table on the basis of the difference.

2. Device according to Claim 1,
**characterized**
**in that** the measurement unit is designed in such a way that the parameter is measured by virtue of a test signal being fed into each of the conductors and being measured following propagation through the conductor.

3. Device according to Claim 2,
wherein the test signal is a high-frequency signal and has a frequency in the range from 10 to 100 MHz.

4. Device according to either of Claims 2 and 3,
**characterized**
**in that** the test signal is a pulse.

5. Device according to one of Claims 1 to 4,
**characterized**
**in that** the two conductors are surrounded by an insulation sheathing and are stranded with one another.

6. Device according to Claim 5,
wherein a torsion introduced by the additional stranding is compensated for by a reverse rotation.

7. Device according to one of Claims 1 to 6,
**characterized**
**in that** the two conductors are embedded together in a profile made of an insulating material and are spaced apart from one another at a fixed distance.

8. Device according to one of Claims 1 to 7,
**characterized**
**in that** the two conductors are each in the form of a coaxial conductor.

9. Device according to one of Claims 1 to 8,
**characterized**
**in that** the two conductors are surrounded by a common shielding.

10. Device according to one of Claims 1 to 9,
wherein the supply line has a number of supply strings.

11. Device according to Claim 10, wherein the supply line is in the form of a cable.

12. Method for measuring the torsion of a sensor line using a device comprising a supply line, a measurement unit, and comprising two machine parts according to Claim 1,
wherein the supply line has a sensor line that is connected to the measurement unit,
**characterized**
**in that** the measurement unit is designed to carry out the following method steps:
- measuring an electrical parameter of the sensor line and using the parameter to infer the torsion,
- measuring a signal attenuation as a parameter of a respective one of the conductors,
- comparing the two signal attenuations with one another by means of an operational amplifier that outputs a difference as a voltage value,
- determining the torsion depending on a difference between the two signal attenuations by means of a table on the basis of the difference.

## Revendications

1. Dispositif comprenant une ligne d'alimentation, une unité de mesure et deux parties de machine qui sont mobiles l'une par rapport à l'autre et qui sont reliées entre elles par la ligne d'alimentation,
la ligne d'alimentation comportant une ligne de capteur qui est reliée à l'unité de mesure,
**caractérisé**
**en ce que** la ligne de capteur est conçue pour mesurer la torsion de la ligne d'alimentation avec l'unité de mesure,
l'unité de mesure est conçue de manière à mesurer un paramètre électrique de la ligne de capteur et à déterminer la torsion à l'aide du paramètre,
la ligne de capteur comporte deux conducteurs qui sont conçu chacun sous la forme de conducteur toronné et qui sont toronnés dans des sens de toronnage opposés l'un à l'autre,
l'unité de mesure est conçue de manière à mesurer une atténuation de signal d'un conducteur respectif comme paramètre,
l'unité de mesure est conçue de manière à comparer les deux atténuations de signal entre elles à l'aide d'un amplificateur opérationnel qui délivre une différence sous la forme d'une valeur de tension et à déterminer la torsion en fonction d'une différence entre les deux atténuations de signal sur la base de la différence à l'aide d'une table.

2. Dispositif selon la revendication 1,
**caractérisé**
**en ce que** l'unité de mesure est conçue de manière à mesurer le paramètre en injectant un signal de test dans chacun des conducteurs et en le mesurant après propagation à travers le conducteur.

3. Dispositif selon la revendication 2,
le signal de test étant un signal à haute fréquence et ayant une fréquence comprise dans la gamme allant de 10 à 100 MHz.

4. Dispositif selon l'une des revendications 2 ou 3,
**caractérisé**
**en ce que** le signal de test est une impulsion.

5. Dispositif selon l'une des revendications 1 à 4,
**caractérisé**
**en ce que** les deux conducteurs sont entourés d'une gaine isolante et commis ensemble.

6. Dispositif selon la revendication 5,
une torsion introduite par le commettage supplémentaire étant compensée par une rotation en sens inverse.

7. Dispositif selon l'une des revendications 1 à 6,
**caractérisé**
**en ce que** les deux conducteurs sont incorporés conjointement dans un profilé en matériau isolant et sont espacés l'un de l'autre d'une distance fixe.

8. Dispositif selon l'une des revendications 1 à 7,
**caractérisé**
**en ce que** les deux conducteurs sont chacun conçus comme des conducteurs coaxiaux.

9. Dispositif selon l'une des revendications 1 à 8,
**caractérisé**
**en ce que** les deux conducteurs sont entourés d'un blindage commun.

10. Dispositif selon l'une des revendications 1 à 9,
la ligne d'alimentation comportant un certain nombre de brins d'alimentation.

11. Dispositif selon la revendication 10,
la ligne d'alimentation étant conçue sous la forme d'un câble.

12. Procédé de mesure de la torsion d'une ligne de capteur à l'aide d'un dispositif comprenant une ligne d'alimentation, une unité de mesure et deux parties de machine selon la revendication 1,
la ligne d'alimentation comportant une ligne de capteur qui est raccordée à l'unité de mesure,
**caractérisé**
**en ce que** l'unité de mesure est conçue pour exécuter les étapes de procédé suivantes :
- mesurer un paramètre électrique de la ligne de capteur et déterminer la torsion à l'aide du paramètre,
- mesurer une atténuation de signal sous la forme d'un paramètre d'un conducteur respctif,
- comparer les deux atténuations de signal entre elles à l'aide d'un amplificateur opérationnel qui délivre une différence sous la forme d'une valeur de tension,
- déterminer la torsion en fonction d'une différence entre les deux atténuations de signal sur la base de la différence à l'aide d'une table.
